**Europäisches Patentamt**

**European Patent Office**

**Office européen des brevets**

(11) Veröffentlichungsnummer: **0 155 654**
A2

(12) # EUROPÄISCHE PATENTANMELDUNG

(21) Anmeldenummer: 85103046.0

(22) Anmeldetag: 16.03.85

(51) Int. Cl.⁴: **A 01 B 69/02**
**A 01 C 7/00**

(30) Priorität: 23.03.84 US 592554

(43) Veröffentlichungstag der Anmeldung:
25.09.85 Patentblatt 85/39

(84) Benannte Vertragsstaaten:
DE FR GB

(71) Anmelder: **DEERE & COMPANY**
**1 John Deere Road**
**Moline Illinois 61265(US)**

(72) Erfinder: **Stringfield White, Gregory**
**3524 70th Street 104**
**Moline Illinois 61265(US)**

(72) Erfinder: **Erickson, William Eugene**
**1214 W. 5th. Street**
**Milan Illinois 61264(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Landwirtschaftliches Arbeitsgerät.**

(57) Eine Sämaschine ist mit vertikal und horizontal verschwenkbaren Spurreißern (10) ausgestattet, wobei die Horizontalverschwenkung des Spurreißers normalerweise nicht möglich ist, da der Aufnahmeteil (51) zur vertikal verschwenkbaren Aufnahme des Spurreißers (10) über einen in einer Buchse (37) aufgenommenen Schraubenbolzen an den Hauptrahmen der Sämaschine angeschlossen ist. Treffen relativ große Hindernisse beim Arbeitseinsatz der Sämaschine auf den Spurreißer auf, so werden derart große Zugkräfte auf den Schraubenbolzen (43) übertragen, daß dieser abreißt und somit eine horizontale Verschwenkung des Spurreißers gestattet, der dann durch einen neuen Schraubenbolzen (43) ersetzt werden muß.

Fig. 4

EP 0 155 654 A2

## Landwirtschaftliches Arbeitsgerät

Die Erfindung bezieht sich auf ein landwirtschaftliches Arbeitsgerät mit einem Hauptrahmen, mit mindestens einem Spurreißer, der mittels eines oder mehrerer Gelenkbolzen vertikal schwenkbar gelagert ist, der mittels eines Gelenkarmes an einem zweiten Gelenkbolzen horizontal schwenkbar gelagert ist, wobei zwischen dem ersten Gelenkbolzen und dem Hauptrahmen eine Sicherheitsarretiervorrichtung vorgesehen ist, die bei einer bestimmten Stellkraft eine Horizontalverschwenkung des Spurreißers gestattet.

Es ist bereits eine Sämaschine bekannt (US-A-3 627 057), die seitlich mit vertikal verschwenkbaren Spurreißern ausgerüstet ist, die hierzu über einen ersten horizontal verlaufenden Gelenkbolzen an die Außenseite des Hauptrahmens der Sämaschine angeschlossen und über einen Hydraulikzylinder verschwenkbar sind. Ferner besteht die Möglichkeit bei derartig angeschlossenen Spurreißern, diese auch zwangsweise in horizontaler Richtung in einem kleinen Bereich zu verschwenken, wenn größere Hindernisse auf den Spurreißer auftreffen. Hierzu ist ein Gestänge mit einer Feder zwischen dem Rahmen der Sämaschine und dem Spurreißer vorgesehen. Wird jedoch der Spurreißer über den Bereich hinaus verstellt, der durch das Gestänge zugelassen wird, dann tritt eine bleibende Verformung am Spurreißer bzw. an den Gelenkteilen auf, so daß die hierdurch notwendige Reparatur sehr aufwendig wird.

Demgegenüber liegt der Erfindung die Aufgabe zugrunde, den einzelnen Gelenken eine Sicherheitsvorrichtung zuzuordnen, die einen einwandfreien Arbeitseinsatz des Spurreißers ermöglicht und dann eine Horizontalverschwenkung gestattet, wenn größere Hindernisse auf den Spurreißer auftreffen, ohne daß eine Beschädigung an den Gelenkteilen oder den Spurreißern zu befürchten ist. Diese Aufgabe ist dadurch gelöst worden, daß die Sicherheitsarretiervorrichtung ein Gestänge aufweist, das einenends mit dem ersten Gelenkbolzen und anderenends mit dem Hauptrahmen wirkungsmäßig verbunden ist, und die horizontal verlaufende Achse des Gestänges sich in etwa tangential an einem Kreisbogen vorbei erstreckt, der durch einen Abstand zwischen dem zweiten Gelenkbolzen und einer Verbindungsstelle zwischen dem ersten Gelenkbolzen und der Sicherheitsarretiervorrichtung gebildet ist, wobei die Verbindungsstelle mit Bezug auf die Fahrtrichtung vor dem zweiten Gelenkbolzen liegt, und daß bei Überschreiten einer bestimmten auf den Spurreißer einwirkenden Stellkraft die Gestängeverbindung unterbrochen wird. Durch die vorteilhafte Ausbildung und Anordnung der Sicherheitsarretiervorrichtung in Verbindung mit einem Gestänge, das zwischen dem Spurreißer und dem Hauptrahmen angeordnet ist, wird bis zu einer bestimmten Belastung der Spurreißer in seiner gewünschten Arbeitsstellung gehalten, ohne daß die Sicherheitsarretiervorrichtung anspricht. Erst nach Überschreiten einer bestimmten Stellkraft aufgrund eines auf dem Feld liegenden Hindernisses kann der Spurreißer die von der Sicherheitsarretiervorrichtung ausgehenden Stellkräfte überwinden, so daß eine Verstellung des Spurreißers in eine mit Bezug auf die Maschine rückwärtige Lage vorgenommen werden kann. Hierzu ist es vorteilhaft, daß das zugehörige Gestänge tangential sich an dem Kreisbogen vorbei erstreckt, so daß die auf das Gestänge ausgeübten Zugkräfte unter normalen Arbeitsbedingungen keine bleibenden Verformungen an dem Gestänge hervorrufen. Erst dann, wenn eine bestimmte Stellkraft überschritten wird, wird das Gestänge so weit beansprucht, daß es abgetrennt bzw. abgeschert wird, so daß dann der Spurreißer horizontal verschwenken kann. Hierdurch erhält man eine einfach wirkende Sicherheitsvorrichtung, die nach diesem Vorgang sich leicht wieder reparieren läßt, da hierzu nur das einzelne Gestänge ausgewechselt zu werden braucht. Hierzu ist es vorteilhaft, daß das Gestänge als Schraubenbolzen ausgebildet ist, der einenends mit seinem Schraubenkopf in einer nach oben offenen Vertiefung eines Aufnahmeteils aufgenommen ist und anderenends sich durch die Bohrung einer Buchse erstreckt, die sich durch eine Öffnung eines Rahmenteils erstreckt und an diesem gesichert ist, während das aus der Buchse herausragende Ende des Schraubenbolzens mittels eines Sicherungselementes an der Stirnseite der Buchse gesichert ist, und daß die Buchse an ihrem dem Schraubenkopf zugewandten Ende einen Kopf aufweist, der in einer an die Vertiefung des Aufnahmeteils angeschlossenen Aussparung aufgenommen ist, während ein Teil des Schraubenbolzens in einer zwischen der Vertiefung und der Aussparung vorgesehenen, nach oben offenen Schlitzöffnung einer Zwischenwand aufgenommen ist. Da das Gestänge als Schraubenbolzen ausgebildet und innerhalb einer relativ langen Buchse geführt ist, kann die Schraube vor dem Arbeitseinsatz des Spurreißers auf eine bestimmte Vorspannkraft eingestellt werden, so daß geringe Stellkräfte oder Schwingungen, die von dem Spurreißer auf den Schraubenbolzen übertragen werden, keine Verformung an dem Gestänge bzw. den übrigen Teilen der Sicherheitsarretiervorrichtung hervorrufen. Hierzu ist es vorteilhaft, daß die Buchse relativ stark ausgebildet ist und den größten Teil des Schraubenbolzens innerhalb der Bohrung der Buchse aufnimmt. Die in dem Aufnahmeteil vorgesehene Vertiefung gestattet eine einfache Verbindung der Buchse mit dem Aufnahmeteil und dem zugehörigen Verbindungsteil zum Anschluß an den Tragarm des Spurreißers, so daß bei Abscherung des Schraubenbolzens dieser relativ schnell ausgewechselt werden kann, da er hierzu lediglich aus der Vertiefung herausgehoben zu werden braucht, um durch einen neuen Schraubenbolzen ersetzt zu werden. Hierzu ist es auch vorteilhaft, daß der größte Teil des Schraubenbolzens in der Buchse lagert.

In weiterer Ausgestaltung der Erfindung ist es vorteilhaft, daß der Kopf der Buchse einen größeren Durchmesser aufweist als die Buchse und daß die Buchse in der Öffnung

einer mit dem Hauptrahmen verbundenen Platte aufgenommen ist und mit Gewinde versehen ist, auf das eine gegen die Platte zur Anlage kommende Mutter aufschraubbar ist, wobei auf das aus der Buchse herausragende Gewinde des Schraubenbolzens ebenfalls eine gegen die Stirnseite der Buchse zur Anlage kommende Mutter aufschraubbar ist. Vorteilhaft ist es ferner, daß die Zwischenwand des Aufnahmeteils durch Anziehen der Mutter auf dem Schraubenbolzen zwischen dem Schraubenkopf und dem Kopf der Buchse einklemmbar ist. Durch Einklemmen der zwischen der Vertiefung und der nach vorne hin offenen Aussparung vorgesehenen Wand läßt sich auf einfache Weise das Gestänge mit der zugehörigen Buchse am Aufnahmeteil anschließen.

Um ein Verbiegen des Schraubenbolzens bei normalem Arbeitseinsatz des Spurreißers zu vermeiden, ist es vorteilhaft, daß der Aufnahmeteil über eine Halterung an den ersten horizontal verlaufenden Gelenkbolzen gelenkig angeschlossen ist.

Ferner ist es vorteilhaft, daß die Buchse bzw. der Kopf der Buchse parallel zueinander verlaufende Anlageflächen aufweisen, die in der Aussparung des Aufnahmeteils anliegen und ein Drehen der Buchse verhindern, und daß der erste horizontal verlaufende Gelenkbolzen in der U-förmig ausgebildeten Halterung gelagert ist, die mittels eines vertikal verlaufenden Bolzens an den Aufnahmeteil angeschlossen ist. Außerdem ist es vorteilhaft, daß der Aufnahmeteil zwei mit Abstand zueinander angeordnete Gelenkarme aufweist, die auf je einem horizontal verlaufenden Gelenkbolzen gelagert sind, wobei bei Überschreiten einer bestimmten Stellkraft das Gestänge abgetrennt wird und der Aufnahmeteil um den vertikal verlaufenden Gelenkbolzen schwenkt. Durch die Verwendung zweier parallel zueinander verlaufender Flächen an dem Kopf der Buchse kann diese in eine ebenfalls parallel zueinander verlaufende Seitenwände aufweisende Aussparung von oben her eingeführt werden und dadurch eine Dreh-

sicherung für die Buchse erzielt werden, da die Anlageflächen des Kopfes der Buchse ein Drehen der Buchse verhindern.

Im folgenden wird die Erfindung anhand von lediglich einen Ausführungsweg darstellenden Zeichnungen näher erläutert. Es zeigt:

Fig. 1    die Draufsicht des hinteren Teils eines Schleppers mit einer daran angeschlossenen Sämaschine,

Fig. 2    eine detaillierte Ansicht zur verschwenkbaren Aufnahme eines Spurreißers,

Fig. 3    einen Schnitt entlang der Linie 3 - 3 gemäß Fig. 2,

Fig. 4    eine perspektivische Darstellung der erfindungsgemäßen Gelenkvorrichtung zur Aufnahme des Spurreißers.

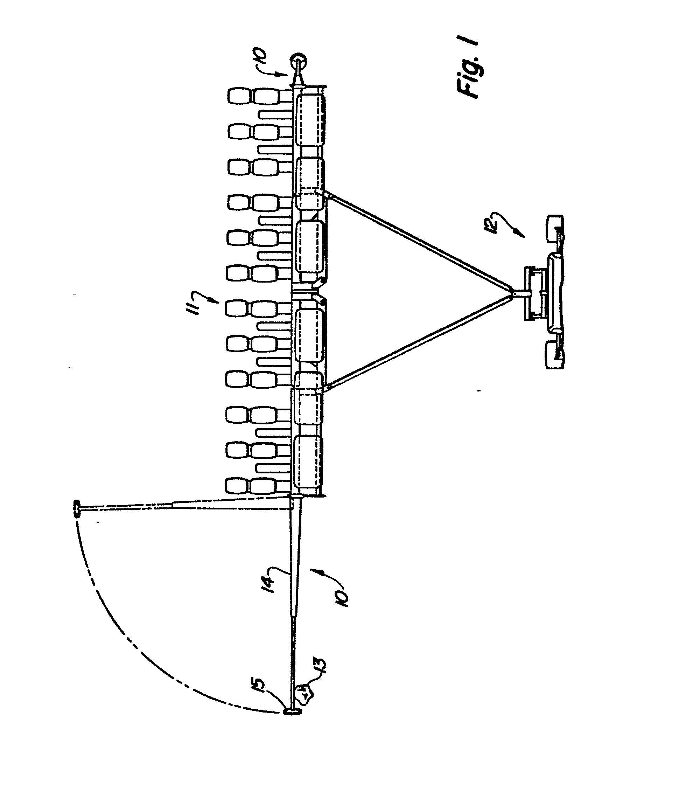

In der Zeichnung ist mit 12 das hintere Ende eines Schleppers bezeichnet, an den mittels einer Anhängevorrichtung eine Sämaschine 11 angeschlossen ist. Wie aus Fig. 1 ferner hervorgeht, sind an der Sämaschine seitlich Spurreißer 10 angeschlossen.

In Fig. 1 ist veranschaulicht, daß ein Hindernis 13 auf einen seitlich ausgeschwenkten Spurreißer aufgetroffen ist, und aufgrund der erfindungsgemäßen Anordnung wird der Spurreißer 10 nicht verbogen oder abgebrochen, sondern in eine in Fig. 1 in gestrichelten Linien dargestellte Stellung verschwenkt. Bewegt sich beispielsweise die Sämaschine 11 nach vorne und gelangt dabei mittels des Spurreißers 10 gegen das in Fig. 1 dargestellte Hindernis 13, so kann, nachdem der Spurreißer 10 nach hinten verschwenkt worden ist und somit das Hindernis 13 passiert hat, dieser wieder in seine in Fig. 1 in ausgezogenen Linien dargestellte Stellung zurückverschwenken.

Der Spurreißer 10 besteht aus einem Tragarm 14, der an seinem äußeren Ende mit einer Scheibe 15 versehen ist, die an dem Tragarm 14 drehbar gelagert ist. Der Tragarm 14 weist zwei Gelenkplatten 20 auf, die mit dem Tragarm 14 starr verbunden, beispielsweise verschweißt, sind. Die Gelenkplatten 20 sind mit untereinander fluchtenden Bohrungen ausgerüstet, die zur Aufnahme von je einem Gelenkbolzen 22 dienen, auf denen Gelenkarme 21 horizontal schwenkbar angeordnet sind. Die einzelnen Gelenkbolzen 22 sind mittels Sicherungsringen 23 fixiert.

Durch die beschriebene Verbindung des Tragarmes 14 an die Gelenkarme 21 mittels der Gelenkbolzen 22 kann der Tragarm 14 um die Mittelachsen der Gelenkbolzen verschwenkt werden. Soll beispielsweise der Spurreißer 10 eingesetzt werden, so kann dieser mittels eines Hydraulikzylinders 24 nach unten verschwenkt werden. Der Hydraulikzylinder 24 ist hierzu über einen Gelenkbolzen 26 an einen Hebelarm 25 angeschlossen, der mit dem Gelenkarm 21 verbunden ist. Soll beispielsweise der Tragarm 14 des Spurreißers 10 angehoben werden, so wird die Kolbenstange des zugehörigen Hydraulikzylinders 24 ausgefahren und somit der Tragarm 14 in eine Stellung gemäß Fig. 1 angehoben. Der Tragarm 14 des Spurreißers 10 befindet sich gemäß Fig. 1 mit Bezug auf die Fahrtrichtung auf der rechten Seite der Sämaschine 11.

Der Gelenkarm 21 ist seinerseits mit einem Rahmen 30 der Sämaschine 11 gelenkig verbunden. Die Gelenkvorrichtung besteht hierzu aus zwei mit Abstand zueinander angeordneten Tragplatten 31, die an der Oberseite und der Unterseite des Rahmens 30 beispielsweise angeschweißt sind. Die Tragplatten sind mit untereinander angeordneten, koaxial zueinander verlaufenden Bohrungen ausgestattet, die zur Aufnahme eines vertikal verlaufenden Gelenkbolzens 32 dienen. Der Gelenkbolzen 32 erstreckt sich ferner durch die im Gelenkarm 21 vorgesehene zylindrische Bohrung, so daß der Gelenkarm 21 und somit der Tragarm 14 des Spurreißers 10 um eine vertikal verlaufende, sich durch den Gelenkbolzen 32 erstreckende Achse schwenken können.

Wenn der Spurreißer 10 im Arbeitseinsatz verwendet werden soll, muß er gegen eine Schwenkbewegung um die vertikal verlaufende Achse des Gelenkbolzens 32 derart gesichert werden, daß er nicht ohne weiteres zurückschwenken kann, sondern nur dann, wenn beispielsweise auf der Bewegungsbahn des Spurreißers 10 größere Hindernisse auftreten, die eine Beschädigung am Spurreißer hervorrufen könnten. Zu der Sicherheitsarretiervorrichtung gehört eine Platte 35, die starr mit dem Rahmen 30 der Sämaschine 11 verbunden ist und beispielsweise hierzu mit den mit Abstand zueinander angeordneten, untereinander liegenden Tragplatten 31 verschweißt ist. Die Platte 35 weist im unteren Bereich eine Öffnung 36 auf, durch die sich eine Buchse 37 erstreckt. Die Buchse 37 weist über ihre gesamte Länge Gewinde 38 auf sowie endseitig eine Bohrung 39. Ferner ist die Buchse 37 an ihrem einen Ende mit einem Kopf ausgerüstet, dessen Durchmesser größer ist als der Durchmesser des Teiles der Buchse, der mit dem Gewinde 38 versehen ist.

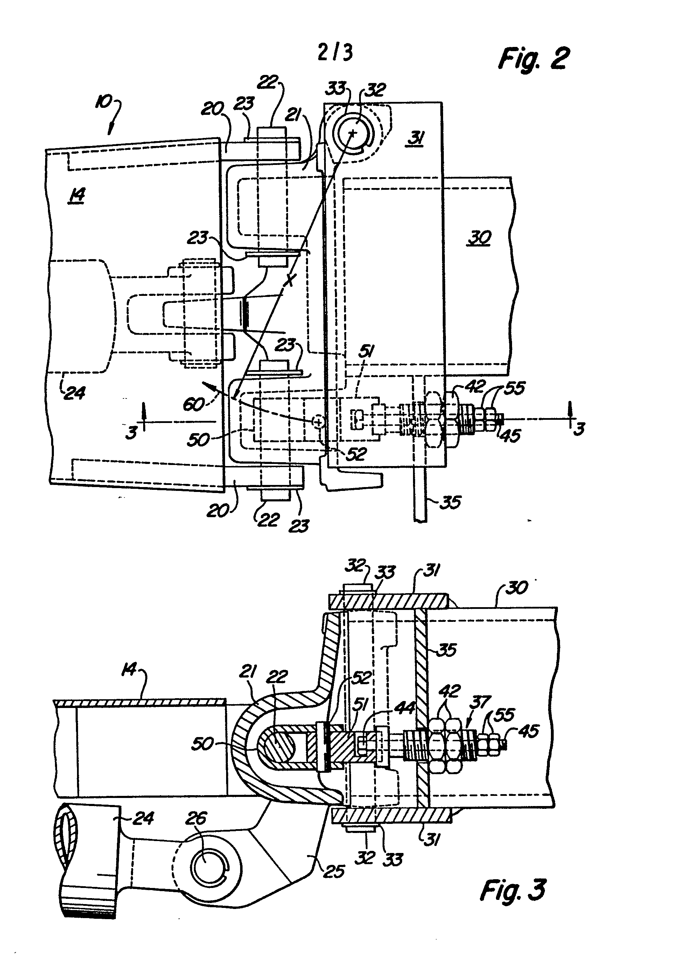

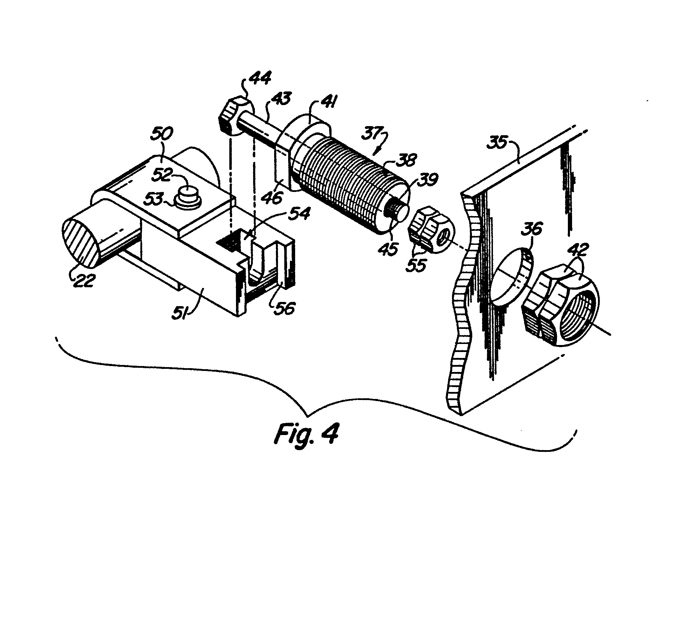

Die sich durch die Buchse 37 erstreckende Bohrung 39 dient zur Aufnahme eines Schraubenbolzens 43, der ebenfalls mit einem Schraubenkopf 44 ausgestattet ist, wobei lediglich das vordere freie Ende des Schraubenbolzens Gewinde 45 aufweist. Auf dem Gelenkbolzen 22 ist eine U-förmig ausgebildete Halterung 50 angeordnet, die den Gelenkbolzen 22 umgibt (siehe Fig. 3 und 4). Zwischen den beiden freiliegenden Schenkeln der Halterung 50 ist ein rechteckförmiger Aufnahmeteil 51 schwenkbar gelagert, der hierzu eine rechtwinklig zum Gelenkbolzen 22 verlaufende Bohrung aufweist, in der ein Gelenkbolzen 52 aufgenommen ist, der sich ferner durch die in den Schenkeln der Halterung 50 vorgesehenen Bohrungen erstreckt und der mittels Sprengringen 53 in Axialrichtung gesichert ist.

Der Aufnahmeteil 51 weist an seinem freien Ende eine rechteckförmig ausgebildete Vertiefung 54 auf, die zur Oberseite der Halterung 50 hin offen ist und deren eine Seite mit einem nach oben hin offenen, U-förmig ausgebildeten Schlitz ausgerüstet ist. Die Vertiefung 54 dient zur Aufnahme des Schraubenkopfes 44, wobei der sich an die Vertiefung 54 anschließende Schlitz zur Aufnahme des sich an den Schraubenkopf anschließenden Schraubenbolzens ohne Gewindeteil dient. Nachdem der Schraubenkopf 44 in die Vertiefung 54 und der Kopf 41 in die am Aufnahmeteil 51 vorgesehene Aussparung 56 eingeführt worden sind, läßt sich auf das Gewinde 45 am Ende des Schraubenbolzens 43 eine Mutter 55 aufschrauben, so daß der Kopf 41 gegen die Stirnseite des Aufnahmeteils 51 anliegt und die Buchse 37 auf dem Schraubenbolzen 43 eine Vorspannung erzeugt. Dabei wird der Schraubenbolzen 43 etwas über das elastische Gebiet hinaus vorgespannt. Ist die entsprechende Einstellung an dem Schraubenbolzen 43 vorgenommen, dann kann der Tragarm 14 um den vertikal verlaufenden Gelenkbolzen 32 schwenken, so daß dabei die Buchse 37 die Öffnung 36 innerhalb der Platte 35 passiert. Nach diesem Vorgang wird die Mutter 42 auf das Gewinde 38 der Buchse 37 aufgeschraubt und so weit angezogen, daß eine Verschwenkung um die Achse des Gelenkbolzens 32 verhindert wird. Es wird darauf hingewiesen, daß bei Auftreffen des Spurreißers 10 auf ein Hindernis 13 die Kräfte, die zur Verschwenkung des Tragarmes 14 notwendig sind, die entsprechenden entgegenstehenden Kräfte überwinden und dann den Tragarm 14 in die in gestrichelten Linien in Fig. 1 angedeutete Stellung verschwenken. Bei Auftreffen des Tragarmes 14 auf das Hindernis 13 wirkt eine Stellkraft, die in Fig. 2 durch den Pfeil 60 angedeutet ist, auf den Schraubenbolzen 43. Die Stellkraft wirkt dabei auf einem Radius x, der durch den Abstand zwischen der Achse des Gelenkbolzens 32 und der Achse des Gelenkbolzens 52 definiert ist. Der Schraubenbolzen 43 ist so angeordnet, daß seine Achse tangential zu dem durch den Gelenkbolzen 52 gezogenen Kreis (Pfeil 60) verläuft. Hierdurch wird verhindert, daß der Schraubenbolzen normalerweise über das elastische Gebiet hinaus einer bleibenden Verformung unterworfen wird bzw. verbogen wird. Ferner widersteht der Schraubenbolzen den normalen Zugkräften, die auf den Spurreißer 10 einwirken, wenn dieser sich im Arbeitseinsatz befindet. Aufgrund der vorteilhaften Anordnung der einzelnen Teile, insbesondere des Schraubenbolzens, sind die auf den Schraubenbolzen 43 einwirkenden Scherkräfte relativ gering. Trifft jedoch ein Hindernis auf den Tragarm 14 auf, so werden die durch den Schraubenbolzen der Sicherheitsarretiervorrichtung aufgebrachten Stellkräfte überwunden, und der Tragarm 14 schwenkt um den Gelenkbolzen 32 nach hinten, wobei der Schraubenbolzen 43 abgetrennt wird.

Patentansprüche

1. Landwirtschaftliches Arbeitsgerät mit einem Hauptrahmen (30), mit mindestens einem Spurreißer (10), der mittels eines oder mehrerer Gelenkbolzen (22) vertikal schwenkbar gelagert ist, der mittels eines Gelenkarmes (21) an einem zweiten Gelenkbolzen (32) horizontal schwenkbar gelagert ist, wobei zwischen dem ersten Gelenkbolzen (22) und dem Hauptrahmen eine Sicherheitsarretiervorrichtung vorgesehen ist, die bei einer bestimmten Stellkraft eine Horizontalverschwenkung des Spurreißers (10) gestattet, dadurch gekennzeichnet, daß die Sicherheitsarretiervorrichtung ein Gestänge aufweist, das einenends mit dem ersten Gelenkbolzen (22) und anderenends mit dem Hauptrahmen (30) wirkungsmäßig verbunden ist, und die horizontal verlaufende Achse des Gestänges sich in etwa tangential an einem Kreisbogen vorbei erstreckt, der durch einen Abstand (x) zwischen dem zweiten Gelenkbolzen (32) und einer Verbindungsstelle (Gelenkbolzen 52 und Schraubenkopf 44) zwischen dem ersten Gelenkbolzen (22) und der Sicherheitsarretiervorrichtung gebildet ist, wobei die Verbindungsstelle mit Bezug auf die Fahrtrichtung vor dem zweiten Gelenkbolzen (32) liegt, und daß bei Überschreiten einer bestimmten auf den Spurreißer einwirkenden Stellkraft die Gestängeverbindung unterbrochen wird.

2. Arbeitsgerät nach Anspruch 1, dadurch gekennzeichnet, daß das Gestänge als Schraubenbolzen (43) ausgebildet ist, der einenends mit seinem Schraubenkopf (44) in einer nach oben offenen Vertiefung (54) eines Aufnahmeteils (51) aufgenommen ist und anderenends sich durch die Bohrung (39) einer Buchse (37) erstreckt, die sich durch eine Öffnung (36) eines Rahmenteils (Platte 35) erstreckt und an diesem gesichert ist, während das aus der Buchse (37) herausragende Ende des Schraubenbolzens (43) mittels eines Sicherungselementes an der Stirnseite der Buchse (37) gesichert ist.

3. Arbeitsgerät nach Anspruch 1 oder 2, dadurch gekennzeichnet, daß die Buchse (37) an ihrem dem Schraubenkopf (44) zugewandten Ende einen Kopf (41) aufweist, der in einer an die Vertiefung (54) des Aufnahmeteils (51) angeschlossenen Aussparung (56) aufgenommen ist, während ein Teil des Schraubenbolzens (43) in einer zwischen der Vertiefung (54) und der Aussparung (56) vorgesehenen, nach oben offenen Schlitzöffnung einer Zwischenwand aufgenommen ist.

4. Arbeitsgerät nach einem oder mehreren der vorherigen Ansprüche, dadurch gekennzeichnet, daß der größte Teil des Schraubenbolzens (43) in der Buchse (37) lagert.

5. Arbeitsgerät nach Anspruch 3, dadurch gekennzeichnet, daß der Kopf (41) der Buchse (37) einen größeren Durchmesser aufweist als die Buchse (37).

6. Arbeitsgerät nach einem oder mehreren der vorherigen Ansprüche, dadurch gekennzeichnet, daß die Buchse (37) in der Öffnung (36) einer mit dem Hauptrahmen (30) verbundenen Platte (35) aufgenommen ist und mit Gewinde versehen ist, auf das eine gegen die Platte (35) zur Anlage kommende Mutter (42) aufschraubbar ist, wobei auf das aus der Buchse herausragende Gewinde (45) des Schraubenbolzens ebenfalls eine gegen die Stirnseite der Buchse zur Anlage kommende Mutter (55) aufschraubbar ist.

7. Arbeitsgerät nach Anspruch 3, dadurch gekennzeichnet, daß die Zwischenwand des Aufnahmeteils (51) durch Anziehen der Mutter (55) auf dem Schraubenbolzen (43) zwischen dem Schraubenkopf (44) und dem Kopf (41) der Buchse (37) einklemmbar ist.

8. Arbeitsgerät nach einem oder mehreren der vorherigen Ansprüche, dadurch gekennzeichnet, daß der Aufnahmeteil (51) über eine Halterung (50) an den ersten horizontal verlaufenden Gelenkbolzen (22) gelenkig angeschlossen ist.

9. Arbeitsgerät nach einem oder mehreren der vorherigen Ansprüche, dadurch gekennzeichnet, daß die Buchse (37) bzw. der Kopf (41) der Buchse (37) parallel zueinander verlaufende Anlageflächen aufweisen, die in der Aussparung (56) des Aufnahmeteils anliegen und ein Drehen der Buchse (37) verhindern.

10. Arbeitsgerät nach einem oder mehreren der vorherigen Ansprüche, dadurch gekennzeichnet, daß der erste horizontal verlaufende Gelenkbolzen (22) in der U-förmig ausgebildeten Halterung (50) gelagert ist, die mittels eines vertikal verlaufenden Bolzens (52) an den Aufnahmeteil (51) angeschlossen ist.

11. Arbeitsgerät nach einem oder mehreren der vorherigen Ansprüche, dadurch gekennzeichnet, daß der Aufnahmeteil (51) zwei mit Abstand zueinander angeordnete Gelenkarme (21) aufweist, die auf je einem horizontal verlaufenden Gelenkbolzen (22) gelagert sind, wobei bei Überschreiten einer bestimmten Stellkraft das Gestänge abgetrennt wird und der Aufnahmeteil (51) um den vertikal verlaufenden Gelenkbolzen (32) schwenkt.

Fig. 1

Fig. 2

Fig. 3

2/3

0155654

3/3

*Fig. 4*